(19) Europäisches Patentamt
European Patent Office
Office européen des brevets

(11) **EP 3 779 627 B1**

(12) **EUROPEAN PATENT SPECIFICATION**

(45) Date of publication and mention
of the grant of the patent:
**15.02.2023 Bulletin 2023/07**

(21) Application number: **19784224.8**

(22) Date of filing: **03.04.2019**

(51) International Patent Classification (IPC):
**G05B 23/02** (1968.09)    **G05B 19/4062** (1995.01)
**H02P 23/04** (2006.01)    G05B 19/042 (1995.01)

(52) Cooperative Patent Classification (CPC):
**G05B 19/4062; G05B 23/0227; H02P 23/04;**
G05B 19/0428; Y02P 90/02

(86) International application number:
**PCT/JP2019/014793**

(87) International publication number:
**WO 2019/198590 (17.10.2019 Gazette 2019/42)**

(54) **STATE-CHANGE DETECTING DEVICE AND STATE-CHANGE DETECTING METHOD**

ZUSTANDSÄNDERUNGSERKENNUNGSVORRICHTUNG UND
ZUSTANDSÄNDERUNGSERKENNUNGSVERFAHREN

DISPOSITIF DE DÉTECTION DE CHANGEMENT D'ÉTAT ET PROCÉDÉ DE DÉTECTION DE
CHANGEMENT D'ÉTAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2018   JP 2018076807**

(43) Date of publication of application:
**17.02.2021 Bulletin 2021/07**

(73) Proprietor: **OMRON CORPORATION
Kyoto-shi,  Kyoto 600-8530 (JP)**

(72) Inventors:
• **URABE, Kentaro
Kizugawa-shi, Kyoto 619-0283 (JP)**
• **EGI, Mamoru
Kizugawa-shi, Kyoto 619-0283 (JP)**

(74) Representative: **Carstens, Dirk Wilhelm
Wagner & Geyer Partnerschaft mbB
Patent- und Rechtsanwälte
Gewürzmühlstraße 5
80538 München (DE)**

(56) References cited:
EP-A1- 3 282 576       WO-A1-2008/053772
JP-A- H06 319 284      JP-A- 2009 192 837
JP-A- 2013 089 089     JP-A- 2014 035 569
JP-A- 2015 156 194     JP-A- 2015 216 709
JP-A- 2016 034 224     JP-A- 2017 174 180
US-A1- 2014 046 548    US-A1- 2016 033 959

**Description**

BACKGROUND

Technical Field

The present invention relates to a state-change detecting device and a state-change detecting method for detecting a state change of a servo system.

Related Art

In a servo system configured by a machine, a motor and a servo driver, vibration or the like may be generated due to a change in the state (rigidity and the like) of the machine or the connection state between the machine and the motor. Therefore, it has been proposed to detect a state change in the servo system by a reduction in a resonance frequency (see patent literature 1) or by an increase in a resonance peak value (a value of gain at a resonance peak).

[Literature of related art]

[Patent literature]

Patent literature 1: Japanese Patent Laid-Open No. 2016-34224 and its family member US2016033959.

SUMMARY

[Problems to be Solved]

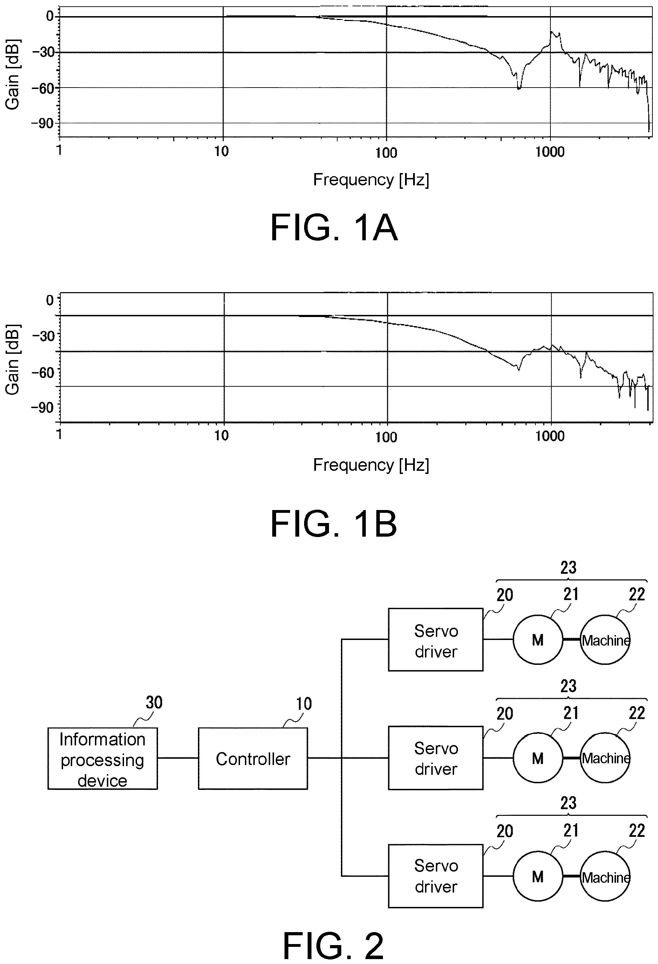

According to the above conventional technique, it is possible to detect that a state change involving a reduction in the resonance frequency or a state change involving an increase in the resonance peak value has occurred in a servo system. However, a state change involving no change in the resonance frequency or a state change involving a reduction in the resonance peak value may occur in the servo system. Specifically, for example, when a coupling screw connecting the machine and the motor is loosened, the gain-frequency characteristic changes from the state shown in FIG. 1A to the state shown in FIG. 1B. The above conventional technique cannot detect this state change.
The present invention has been made in view of the above problems, and aims to provide a state-change detecting device and a state-change detecting method capable of detecting a state change involving no change in the resonance frequency or a state change involving a reduction in the resonance peak value.

[Means to Solve Problems]

In order to solve the above problems, a state-change detecting device according to one aspect of the present invention includes: a calculation part that measures gain-frequency characteristics of a servo system to be evaluated and that calculates, as a feature value of the servo system to be evaluated, a value correlated with an integrated value of gains at individual frequencies within a frequency range to be evaluated in the measured gain-frequency characteristics; and a determination part that determines whether or not the state of the servo system to be evaluated has changed by comparing the feature value calculated by the calculation part with the feature value in the past of the servo system to be evaluated.
That is, no matter the state change that has occurred in the servo system is the state change involving no change in the resonance frequency or the state change involving a reduction in the resonance peak value, the value of the feature value which is "a value correlated with an integrated value of gains at individual frequencies within a frequency range to be evaluated in the gain-frequency characteristics" changes from the value in the past. Consequently, according to the state-change detecting device having the above configuration, it is also possible to detect a state change that cannot be detected in the above conventional technique.
Besides, the frequency range to be evaluated of the state-change detecting device (calculation part) may be the entire frequency range in which the gain-frequency characteristics are measured. The frequency range to be evaluated may be a frequency range equal to or greater than a speed proportional gain used in the servo system to be evaluated. In addition, the calculation part of the state-change detecting device may calculate, as the feature value of the servo system to be evaluated, an integrated value of values obtained by subtracting a reference gain from the gains at individual frequencies within the frequency range to be evaluated.
The state-change detecting device may further include a reference gain changing part that changes the reference gain to a value designated by a user or a frequency range changing part that changes at least one of the upper limit value and the lower limit value of the frequency range to be evaluated to a value designated by the user. The state-change detecting device may further include a warning information output part that outputs, when it is determined by the determination part that the state of the servo system to be evaluated has changed, warning information indicating that the state of the servo system to be evaluated has changed.

In the state-change detecting device, a part which "performs a first determination on whether or not the state of the servo system to be evaluated has changed by comparing the feature value calculated by the calculation part with the feature value in the past of the servo system to be evaluated, and determines that the state of the servo system to be evaluated has changed when it is determined a predetermined number of times by the first determination that the state of the servo system to be evaluated has changed" may be employed as the determination part.

In addition, in the state-change detecting device, a part which "performs a first determination for determining whether or not the state of the servo system to be evaluated has changed by comparing the feature value calculated by the calculation part with the feature value in the past of the servo system to be evaluated and a second determination for determining whether or not the state of the servo system to be evaluated has changed based on the magnitude of the resonance peak gain in the gain-frequency characteristics measured by the calculation part, and sets a logical product or a logical sum of the determination results of the first determination and the second determination as a determination result of whether or not the state of the servo system to be evaluated has changed" may be employed as the determination part.

In order to make it possible to automatically detect the presence or absence of a state change in the servo system to be evaluated, in the state-change detecting device, a part that calculates the feature value of the servo system to be evaluated when one or more state quantities related to the servo system to be evaluated satisfy a condition designated by start condition information may be employed as the calculation part.

The state-change detecting device may employ a configuration in which "a control part that controls a plurality of servo systems is further included; when one or more state quantities related to the plurality of servo systems and obtained by the control part satisfy a condition designated by start condition information, the calculation part treats one of the plurality of servo systems that is designated by the start condition information as the servo system to be evaluated, and calculates the feature value of the servo system to be evaluated". In other words, the state-change detecting device may be realized as a controller having an automatic detection function for the state change in the servo system based on the above feature value.

The calculation part of the state-change detecting device may save the measured gain-frequency characteristics in a storage device in association with the start condition information, or may save the measured gain-frequency characteristics in the storage device in association with the measurement time of the gain-frequency characteristics and the start condition information.

In addition, a state-change detecting method according to one aspect of the present invention includes: a calculation step for measuring gain-frequency characteristics of a servo system to be evaluated and calculating, as a feature value of the servo system to be evaluated, a value correlated with an integrated value of gains at individual frequencies within a frequency range to be evaluated in the measured gain-frequency characteristics; and a determination step for determining whether or not the state of the servo system to be evaluated has changed by comparing the feature value calculated by the calculation step with the feature value in the past of the servo system to be evaluated.

Consequently, it is also possible to detect a state change that cannot be detected in the above conventional technique by this state-change detecting method.

[Effect]

According to the present invention, it is possible to detect a state change involving no change in the resonance frequency or a state change involving a reduction in the resonance peak value.

BRIEF DESCRIPTION OF THE DRAWINGS

FIG. 1A is a gain-frequency characteristic diagram of a normal servo system.
FIG. 1B is a gain-frequency characteristic diagram of a servo system in which the connection between a motor and a machine is in an abnormal state.
FIG. 2 is an illustrative diagram of a usage example of a controller according to an embodiment of the present invention.
FIG. 3 is a functional block diagram of the controller according to the embodiment.
FIG. 4A is an illustrative diagram of a feature value.

FIG. 4B is an illustrative diagram of a feature value.

FIG. 5 is a flowchart of state start processing executed by the controller (state monitoring unit) according to the embodiment.

FIG. 6 is a flowchart of first state determination processing that can be executed by the controller (state monitoring unit) according to the embodiment.

FIG. 7 is a flowchart of second state determination processing that can be executed by the controller (state monitoring unit) according to the embodiment.

FIG. 8 is a flowchart of third state determination processing that can be executed by the controller (state monitoring unit) according to the embodiment.

FIG. 9 is a flowchart of fourth state determination processing that can be executed by the controller (state monitoring unit) according to the embodiment.

DESCRIPTION OF THE EMBODIMENTS

Hereinafter, an embodiment of the present invention is described with reference to the drawings.

FIG. 2 shows a usage example of a controller 10 according to the embodiment of the present invention.

The controller 10 according to the embodiment is a device (so-called PLC: Programmable Logic Controller) that controls a plurality of servo systems 23 and detects a state change of each servo system 23. Besides, the servo system 23 is a system configured by a machine 22 such as a ball screw, a motor (M) 21 for driving the machine 22, and a servo driver 20 for controlling the motor 21.

As shown in FIG. 2, the controller 10 according to the embodiment is operated while being connected to the servo driver 20 and an information processing device 30 in each servo system 23.

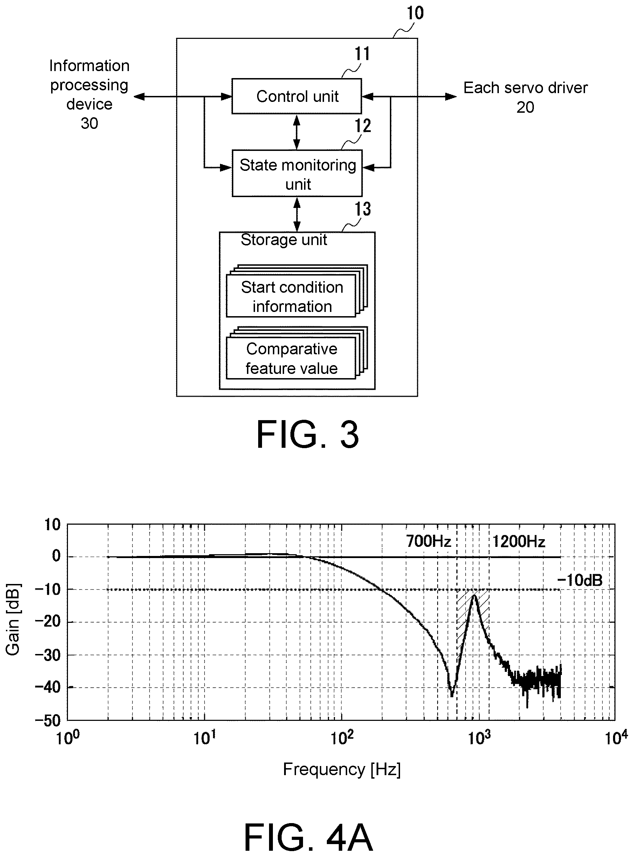

The servo driver 20 connected to the controller 10 is a servo driver having a function of measuring frequency response (frequency dependence of gain and phase). The information processing device 30 is a computer used by a user to program the controller 10 or to change parameters of various processing executed by the controller 10 (state monitoring unit 12 described later: see FIG. 3). The information processing device 30 is also used to notify the user that a state change has occurred in any one of the servo systems 23.

FIG. 3 shows a functional block diagram of the controller 10. As illustrated, the controller 10 includes a control unit 11, a state monitoring unit 12, and a storage unit 13.

The control unit 11 is a functional block that controls each servo system 23 by giving various control commands (position command, speed command, and the like) to the servo driver 20 of each servo system 23.

The state monitoring unit 12 is a functional block that detects a state change of each servo system 23. The storage unit 13 is a storage device that stores various information (start condition information, comparative feature value, and the like) referred to by the state monitoring unit 12. The storage unit 13 is also used to save information (not shown) collected/calculated by the state monitoring unit 12, and the state monitoring unit 12 also has a function of providing information in the storage unit 13 for another device (information processing device 30).

Hereinafter, the state monitoring unit 12 and the storage unit 13 are described more specifically.

In order to make it possible to detect that a state change involving no change in the resonance frequency or a state change involving a reduction in the resonance peak value has occurred in the servo system 23, the state monitoring unit 12 is configured to determine whether or not there is a state change of a certain servo system 23 (hereinafter referred to as a servo system to be evaluated) based on "a value correlated with an integrated value of gains at individual frequencies within a frequency range to be evaluated in the gain-frequency characteristics of the servo system to be evaluated".

Here, the "value correlated with an integrated value of gains at individual frequencies within a frequency range to be evaluated in the gain-frequency characteristics of the servo system to be evaluated" (hereinafter, referred to as a feature value of the servo system to be evaluated) is, for example, a value as follows.

(a) an integrated value of the gains at individual frequencies within the frequency range to be evaluated in the gain-frequency characteristics of the servo system to be evaluated
(b) an integrated value of absolute values of the gains at individual frequencies within the frequency range to be evaluated in the gain-frequency characteristics of the servo system to be evaluated
(c) an integrated value of the values obtained by subtracting a reference gain from the gains at individual frequencies within the frequency range to be evaluated in the gain-frequency characteristics of the servo system to be evaluated
(d) an integrated value of absolute values of the values obtained by subtracting a reference gain from the gains at individual frequencies within the frequency range to be evaluated in the gain-frequency characteristics of the servo system to be evaluated

In addition, the frequency range to be evaluated is a frequency range including a resonance peak frequency.

Here, a case in which a feature value T of the servo system to be evaluated is the value of (d), that is, a value calculated by the following equation (1), is considered.

[Equation 1]

$$T = \sum_{k=m}^{n} \mathrm{ABS}\big(g(k) - g_{baseline}\big) \qquad (1)$$

Besides, in equation (1), $g_{baseline}$ is a reference gain [dB], g(k) is a gain [dB] at a frequency f(k), and n and m are respectively k values at which f(k) is closest to the lower limit value and the upper limit value of the frequency range to be evaluated.

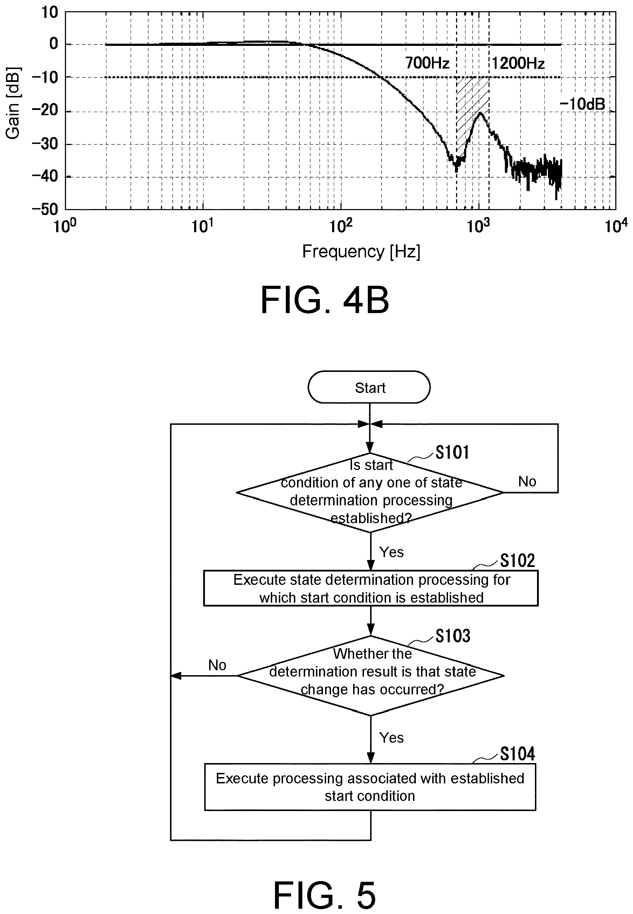

As described above, in the servo system 23, a state change involving a reduction in the resonance frequency or a state change involving an increase in the resonance peak value may occur (see FIGS. 1A and 1B). For example, the feature value T calculated by equation (1) when the frequency range to be evaluated is 700 Hz to 1200 Hz and the reference gain is -10 dB is a value representing the area of a shaded portion shown in FIGS. 4A and 4B (accurately, the area when the horizontal axis (frequency axis) is a linear scale)

Consequently, by comparing a feature value $T_A$ at the time of normal state and a feature value $T_B$ at present, it can be determined whether or not a state change involving a reduction in the resonance frequency or a change involving an increase in the resonance peak value has occurred in the servo system to be evaluated.

Besides, various methods can be employed as the method for comparing the feature value $T_A$ and the feature value $T_B$ to determine whether or not the state of the servo system to be evaluated has changed. For example, when $T_B$ is a value that is equal to or greater than $T_A$ (1 - σ/100) and equal to or smaller than $T_A$ (1 + σ/100), it may be determined that the state of the servo system to be evaluated has not changed, and if not, it may be determined that the state of the servo system to be evaluated has changed. Here, σ refers to a preset value for defining an allowable range.

In addition, when the "$T_B/T_A$" value or the "$T_A/T_B$" value is within a defined range (numerical range centered on "1"), it may be determined that the state of the servo system to be evaluated has not changed, and if not, it may be determined that the state of the servo system to be evaluated has changed.

As described above, if it is determined whether or not the state of the servo system to be evaluated has changed according to the above feature value, it is possible to detect that a state change involving a reduction in the resonance frequency or a state change involving an increase in the resonance peak value has occurred in the servo system. However, the proper values of the frequency range to be evaluated and the reference gain differ depending on the servo system 23, and the timing at which each servo system 23 should be evaluated also varies. Therefore, the state monitoring unit 12 is configured to start the state monitoring processing having the procedure shown in FIG. 5 when the operation of the control unit 11 is started.

That is, when the control unit 11 starts control of each servo system 23 (servo driver 20), the state monitoring unit 12 is in a waiting (monitoring) state until the start condition of any one of the state determination processing is established based on the information from the servo driver 20 and/or the control unit 11 and the plurality of start condition information in the storage unit 13 in step S101.

Here, the start condition information (see FIG. 2) in the storage unit 13 includes the following information.

· servo system designation information for designating the servo system 23 for which the presence or absence of a state change should be checked
· type designation information for designating the type of state determination processing that should be performed on the servo system 23 designated by the servo system designation information
· processing execution condition information in which the condition for executing the state determination processing of the type designated by the type designation information is defined by a state quantity (position of each machine 22, actual torque of each motor 21, or the like) obtained from the servo driver 20 and/or the control unit 11

- information for designating each parameter value to be used (frequency range to be evaluated, reference gain, allowable range described later, or the like) and a comparative feature value on the storage unit 13 (details are described later) during execution of the state determination processing of the type indicated by the type designation information

Consequently, the judgment actually performed by the state monitoring unit 12 in step S101 is a judgment of the state monitoring unit 12 on whether or not the condition defined by the processing execution condition information in any start condition information in the storage unit 13 is satisfied.

In addition, the comparative feature value in the storage unit 13 is a feature value stored by the state monitoring unit 12 into the storage unit 13 before setting/changing the start condition information. Specifically, when the user tries to set/change the start condition information by operating the information processing device 30, the state monitoring unit 12 controls each servo system 23 to satisfy the condition indicated by the processing execution condition information in the start condition information to be set/changed, and then measures the frequency response of the servo system to be evaluated. After that, the state monitoring unit 12 calculates the feature value from the measured frequency response, and stores the calculated feature value in the storage unit 13 in a form that can be identified by specific identification information. Then, the state monitoring unit 12 generates actual start condition information by including the identification information in the start condition information to be set/changed, and stores the generated start condition information in the storage unit 13.

When the start condition of any one of the state determination processing is satisfied (step S101; YES), the state monitoring unit 12 executes the state determination processing for which the start condition is established (step S102). More specifically, when the condition defined by certain processing execution condition information in the storage unit 13 is satisfied (step S101; YES), the state monitoring unit 12 grasps, based on other information in the start condition information including the processing execution condition information, a servo system to be processed which is the servo system 23 for which the presence or absence of a state change should be checked (step S 102). In addition, the state monitoring unit 12 grasps the type of state determination processing to be performed on the servo system to be processed, each parameter value (frequency range to be evaluated, reference gain, or the like ) to be used in the state determination processing, and the comparative feature value (step S 102). Then, the state monitoring unit 12 uses the grasped frequency range to be evaluated and the like to execute the state determination processing of the grasped type (step S102).

Before the content of the remaining steps of the state monitoring processing (FIG. 5) is described, the content of each state determination processing that may be executed in step S102 is described.

The state determination processing (different types of state determination processing) that may be executed in step S102 includes first to fourth state determination processing.

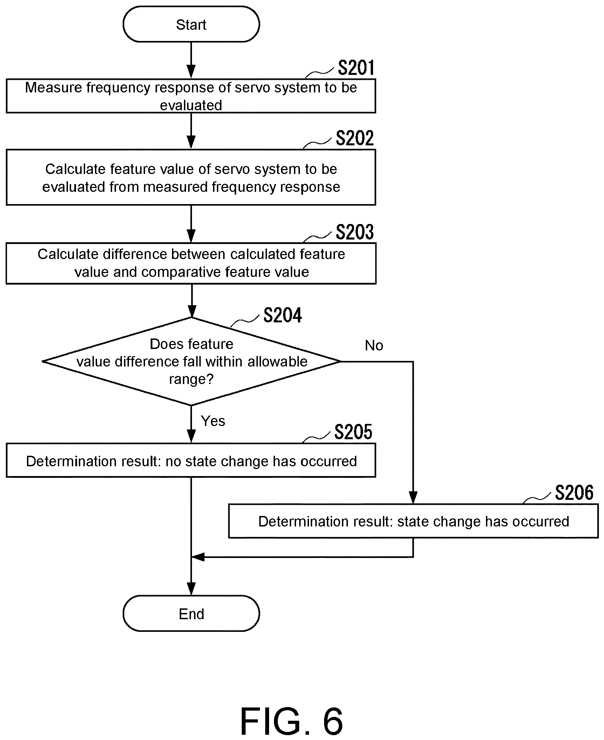

The first state determination processing is processing having the procedure shown in FIG. 6.

That is, the state monitoring unit 12 that has started the first state determination processing first measures the frequency response of the servo system to be evaluated (step S201). More specifically, in step S201, the state monitoring unit 12 issues a measurement instruction for the frequency response to the servo system to be evaluated (servo driver 20 in the servo system to be evaluated), and performs processing for storing (saving) the frequency response transmitted from the servo system to be evaluated as a response to the instruction into the storage unit 13 in association with the start condition information that causes the start of the first state determination processing.

The state monitoring unit 12 that has completed the processing of step S201 calculates the feature value of the servo system to be evaluated from the measured frequency response (step S202). The feature value calculated in step S202 by the state monitoring unit 12 according to the embodiment is the feature value (d) described above. However, the feature value may be any "value correlated with an integrated value of gains at individual frequencies within a frequency range to be evaluated in the gain-frequency characteristics of the servo system to be evaluated" (for example, the feature values (a) to (c) described above).

After that, the state monitoring unit 12 calculates a difference between the calculated feature value and the comparative feature value designated by the start condition information that causes the start of the state determination processing being executed (in the embodiment, the comparative feature value - the calculated feature value) (step S203). Then, when the calculated difference is a value within the allowable range designated by the start condition information that causes the start of the state determination processing being executed (step S204; YES), the state monitoring unit 12 determines that the state of the servo system to be evaluated has not changed (step S205), and ends the first state determination processing. In addition, when the calculated difference is a value not within the allowable range (step S204; NO), the state monitoring unit 12 determines that the state of the servo system to be evaluated has changed (step S206), and ends the first state determination processing.

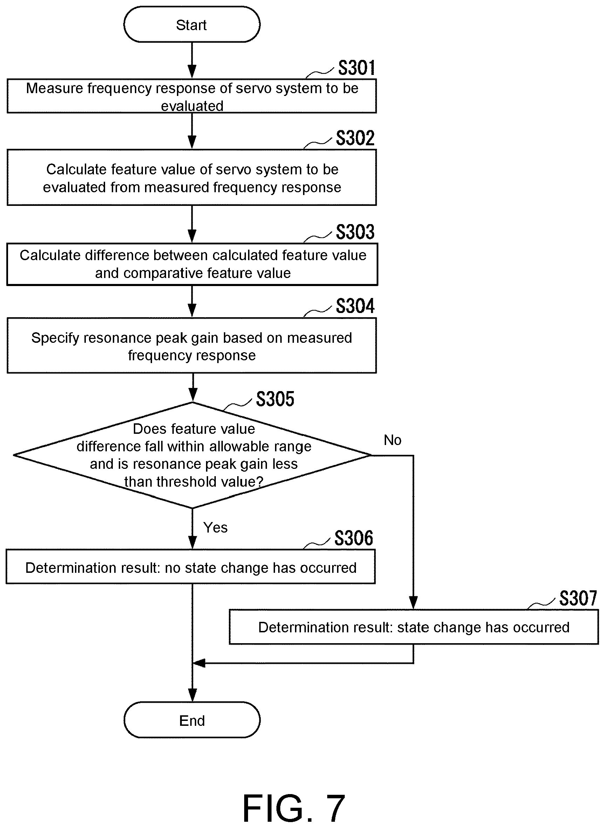

The second state determination processing is processing having the procedure shown in FIG. 7.

The processing in steps S301 to S303 of the second state determination processing is respectively the same as the processing in steps S201 to S203 of the first state determination processing (FIG. 6). As illustrated, in the second state determination processing, the resonance peak gain (gain value of the resonance peak) is specified from the measurement result of the frequency response (step S304) before the determination on whether the state has changed (step S305).

Then, in the second state determination processing, when the feature value difference calculated in the processing of step S303 is within the allowable range and the resonance peak gain is less than a threshold value (step S305; YES), it is determined that the state of the servo system to be evaluated has not changed (step S306), and if not (step S305; NO), it is determined that the state of the servo system to be evaluated has changed (step S307).

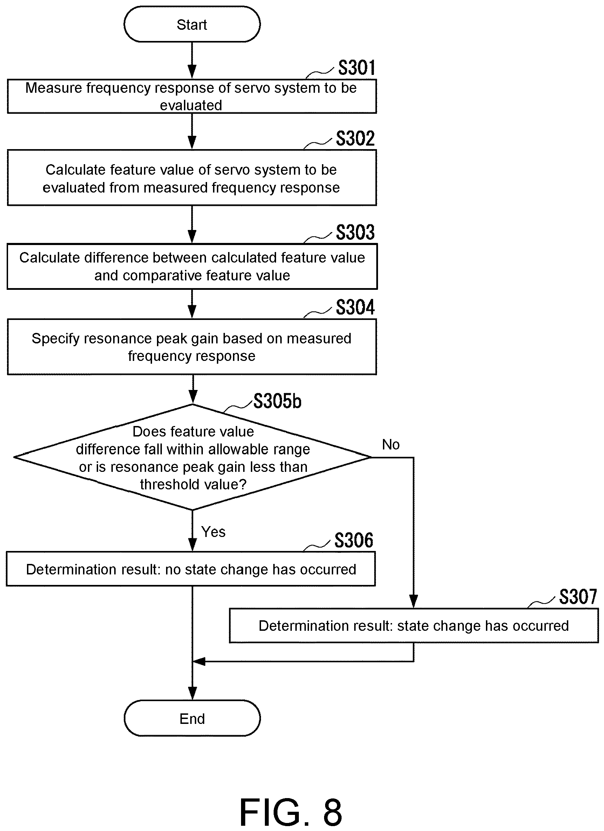

The third state determination processing is processing having the procedure shown in FIG. 8.

As is clear from the comparison between FIG. 7 and FIG. 8, the third state determination processing is processing in which the determination condition for whether or not the state in the second state determination processing has changed is changed to another condition.

Specifically, as illustrated, in the third state determination processing, when the feature value difference is within the allowable range and when the resonance peak gain is less than the threshold value (step S305b; YES), it is determined that the state of the servo system to be evaluated has not changed (step S306). Then, when the feature value difference is not within the allowable range and when the resonance peak gain is not less than the threshold value (step S305b; NO), it is determined that the state of the servo system to be evaluated has changed (step S307).

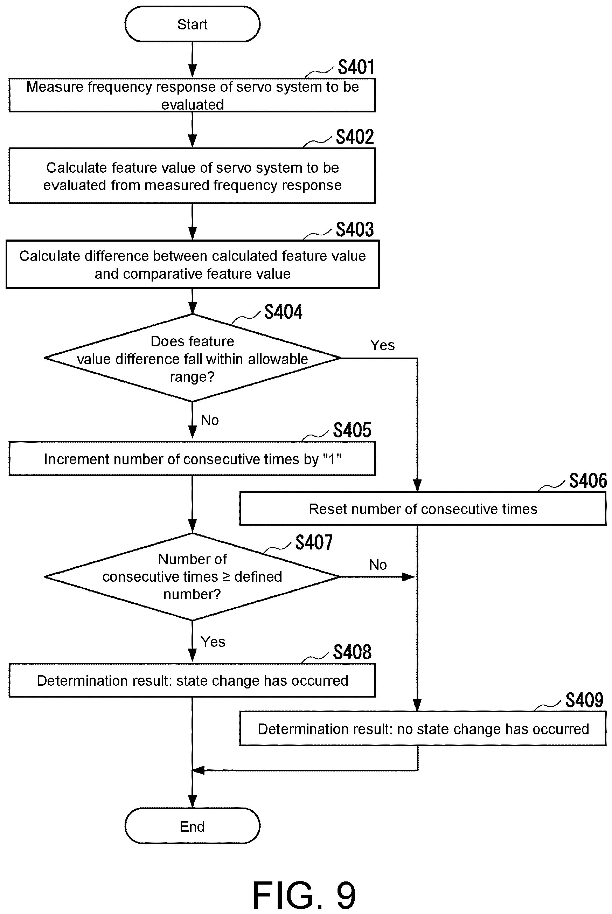

The fourth state determination processing is processing having the procedure shown in FIG. 9.

The processing in steps S401 to S404 of the fourth state determination processing is respectively the same as the processing in steps S201 to S204 of the first state determination processing (FIG. 6).

However, while the judgment in step S204 of the first state determination processing is the final judgment on whether or not the state of the servo system to be evaluated has changed, the judgment in step S404 of the fourth state determination processing is the first judgment on whether or not the state of the servo system to be evaluated has changed. Specifically, as shown in FIG. 9, when the feature value difference is not within the allowable range (step S404; NO), the state monitoring unit 12 executing the fourth state determination processing increments the number of consecutive times managed as information related to the servo system to be evaluated by "1" (step S405).

Then, the state monitoring unit 12 determines that the state of the servo system to be evaluated has changed (step S408) when the number of consecutive times after value update is equal to or greater than a defined number (step S407; YES), and determines that the state of the servo system to be evaluated has not changed (step S409) when the number of consecutive times has not exceeded the defined number of times (step S407; NO). Then, the state monitoring unit 12 that has completed the processing in step S408 or S409 ends the fourth state determination processing.

In addition, when the feature value difference is within the allowable range (step S404; YES), the state monitoring unit 12 resets the number of consecutive times to "0" (step S406). Then, the state monitoring unit 12 determines that the state of the servo system to be evaluated has not changed (step S409), and then ends the fourth state determination processing.

Returning to FIG. 5, the remaining steps of the state monitoring processing are described.

The state monitoring unit 12 that has completed the state determination processing (any one of the first to fourth state determination processing) judges whether or not it has been determined in the state determination processing that the state of the servo system to be evaluated has changed (step S103). Then, when it is not determined in the state determination processing that the state of the servo system to be evaluated has changed (step S103; NO), the state monitoring unit 12 restarts the processing in step S101 and subsequent steps. In addition, when it is determined in the state determination processing that the state of the servo system to be evaluated has changed (step S103; YES), the state monitoring unit 12 performs the processing associated with the established start condition (step S104). In this step, according to the established start condition (start condition information in which the condition defined by the processing execution condition information is satisfied), processing for displaying, on the display of the information processing device 30, the fact that a state change has occurred in the servo system to be evaluated together with the detection time of the state change and the like, or processing for notifying the control unit 11 that a state change has occurred in the servo system to be evaluated is performed. Besides, when the latter processing is performed in step S104, the control unit 11 is configured to change the change content for some servo systems 23 when notified that a state change has occurred in the servo system to be evaluated.

As described above, the controller 10 has a function of detecting whether or not the state of each servo system 23 has changed based on the feature value that is "a value correlated with an integrated value of gains at individual frequencies within a frequency range to be evaluated in the gain-frequency characteristics". In addition, because the controller 10 is configured so that the user can change various parameters, according to the controller 10, it is possible to accurately determine whether or not the state of each servo system 23 has changed.

< < Modification > >

The controller 10 described above can be modified in various ways. For example, the controller 10 may be modified into a device that controls one servo system 23. In addition, based on the above technique, a device having only a function of detecting whether or not the state of one or more servo systems 23 has changed (a device in which the control function of the servo system 23 is removed from the controller 10) may be realized. In addition, the specific processing procedure of the state monitoring processing and each state determination processing may be different from those shown in FIGS. 5 to 9. For example, each state determination processing may be modified to processing for calculating the ratio of two feature values instead of the difference between the two feature values and determining the presence or absence of a state change based on the calculation result.

[Reference Signs List]

| | |
|---|---|
| 10 | controller |
| 11 | control unit |
| 12 | state monitoring unit |
| 13 | storage unit |
| 20 | servo driver |
| 21 | motor |
| 22 | machine |
| 23 | servo system |
| 30 | information processing device |
| S101 to S104, S201 to S206, S301 to S304, S305, S305b, S306 to S307, S401 to S409 | steps |

**Claims**

1. A state-change detecting device (10), **characterized in that**, the state-change detecting device (10) comprises:

   a calculation part (12) configured to measure gain-frequency characteristics of a servo system to be evaluated (23) and to calculate, as a feature value of the servo system to be evaluated (23), a value correlated with an integrated value of gains at individual frequencies within a frequency range to be evaluated in the measured gain-frequency characteristics; and
   a determination part (12) configured to determine whether or not a state of the servo system to be evaluated (23) has changed by comparing the feature value calculated by the calculation part (12) with the feature value in the past of the servo system to be evaluated (23).

2. The state-change detecting device (10) according to claim 1, **characterized in that**,
   the calculation part (12) is configured to calculate, as the feature value of the servo system to be evaluated (23), an integrated value of values obtained by subtracting a reference gain from the gains at individual frequencies within the frequency range to be evaluated.

3. The state-change detecting device (10) according to claim 2, **characterized in that**, the state-change detecting device (10) further comprises:
   a reference gain changing part configured to change the reference gain to a value designated by a user.

4. The state-change detecting device (10) according to any one of claims 1 to 3, **characterized in that**, the state-change detecting device (10) further comprises:
   a frequency range changing part configured to change at least one of an upper limit value and a lower limit value of the frequency range to be evaluated to the value designated by the user.

5. The state-change detecting device according to claim 1 or 2, **characterized in that**,
   the frequency range to be evaluated is a frequency range equal to or greater than a speed proportional gain used in the servo system to be evaluated (23).

6. The state-change detecting device (10) according to any one of claims 1 to 5, **characterized in that**, the state-change detecting device (10) further comprises:
   a warning information output part configured to output, when it is determined by the determination part (12) that the state of the servo system to be evaluated (23) has changed, warning information indicating that the state of the servo system to be evaluated (23) has changed.

7. The state-change detecting device (10) according to any one of claims 1 to 6, **characterized in that**,
   the determination part (12) is configured to perform a first determination on whether or not the state of the servo system to be evaluated (23) has changed by comparing the feature value calculated by the calculation part (12) with the feature value in the past of the servo system to be evaluated (23), and to determine that the state of the servo system to be evaluated (23) has changed when it is determined a predetermined number of times by the first determination that the state of the servo system to be evaluated (23) has changed.

8. The state-change detecting device (10) according to any one of claims 1 to 6, **characterized in that**, the determination part (12) is configured to perform a first determination for determining whether or not the state of the servo system to be evaluated has changed (23) by comparing the feature value calculated by the calculation part (12) with the feature value in the past of the servo system to be evaluated (23) and a second determination for determining whether or not the state of the servo system to be evaluated (23) has changed based on a magnitude of a resonance peak gain in the gain-frequency characteristics measured by the calculation part (12), and to set a logical product or a logical sum of determination results of the first determination and the second determination as a determination result of whether or not the state of the servo system to be evaluated (23) has changed.

9. The state-change detecting device (10) according to any one of claims 1 to 8, **characterized in that**, the calculation part (12) is configured to calculate the feature value of the servo system to be evaluated (23) when one or more state quantities related to the servo system to be evaluated (23) satisfy a condition designated by start condition information.

10. The state-change detecting device (10) according to any one of claims 1 to 8, **characterized in that**, the state-change detecting device (10) further comprises:

   a control part (11) configured to control a plurality of servo systems (23),
   wherein when one or more state quantities related to the plurality of servo systems (23) and obtained by the control part satisfy a condition designated by start condition information, the calculation part (12) is configured to treat one of the plurality of servo systems (23) that is designated by the start condition information as the servo system to be evaluated (23), and to calculate the feature value of the servo system to be evaluated (23).

11. The state-change detecting device (10) according to claim 9 or 10, **characterized in that**, the calculation part (12) is configured to save the measured gain-frequency characteristics in a storage device in association with the start condition information.

12. The state-change detecting device (10) according to claim 11, **characterized in that**, the calculation part (12) is configured to save the measured gain-frequency characteristics in the storage device in association with a measurement time of the gain-frequency characteristics and the start condition information.

13. A state-change detecting method, **characterized in that**, the method comprises:

   a calculation step for measuring gain-frequency characteristics of a servo system to be evaluated (23) and calculating, as a feature value of the servo system to be evaluated (23), a value correlated with an integrated value of gains at individual frequencies within a frequency range to be evaluated in the measured gain-frequency characteristics; and
   a determination step for determining whether or not a state of the servo system to be evaluated (23) has changed by comparing the feature value calculated by the calculation step with the feature value in the past of the servo system to be evaluated (23).

**Patentansprüche**

1. Zustandsänderungs-Erfassungsvorrichtung (10), **dadurch gekennzeichnet, dass** die Zustandsänderungs-Erfassungsvorrichtung (10) umfasst:

   ein Berechnungsteil (12), das konfiguriert ist, um Verstärkungs-Frequenz-Eigenschaften eines zu bewertenden Servosystems (23) zu messen und, um als einen Merkmalswert des zu bewertenden Servosystems (23) einen Wert zu berechnen, der mit einem integrierten Wert von Verstärkungen bei einzelnen Frequenzen innerhalb eines zu bewertenden Frequenzbereichs in den gemessenen Verstärkungs-Frequenz-Eigenschaften korreliert ist; und
   ein Bestimmungsteil (12), das konfiguriert ist, um zu bestimmen, ob sich ein Zustand des zu bewertenden Servosystems (23) geändert hat oder nicht, durch Vergleichen des Merkmalswerts, berechnet mit dem Berechnungsteil (12), mit dem Merkmalswert des zu bewertenden Servosystems (23) in der Vergangenheit.

2. Zustandsänderungs-Erfassungsvorrichtung (10) gemäß Anspruch 1, **dadurch gekennzeichnet, dass** das Berechnungsteil (12) konfiguriert ist, um als den Merkmalswert des zu bewertenden Servosystems (23) einen integrierten Wert von Werten zu berechnen, die durch Subtrahieren einer Referenzverstärkung von Verstärkungen bei individuellen Frequenzen innerhalb des zu bewertenden Frequenzbereich erhalten werden.

3. Zustandsänderungs-Erfassungsvorrichtung (10) gemäß Anspruch 2, **dadurch gekennzeichnet, dass** die Zustandsänderungs-Erfassungsvorrichtung (10) ferner umfasst: ein Referenzverstärkungs-Änderungsteil, das konfiguriert ist, um die Referenzverstärkung auf einen Wert, bezeichnet von einem Benutzer, zu ändern.

4. Zustandsänderungs-Erfassungsvorrichtung (10) gemäß einem der Ansprüche 1 bis 3, **dadurch gekennzeichnet, dass** die Zustandsänderungs-Erfassungsvorrichtung (10) ferner umfasst:
ein Frequenzbereichs-Änderungsteil, das konfiguriert ist, um wenigstens einen von einem oberen Grenzwert und einem unteren Grenzwert des zu bewertenden Frequenzbereichs auf den Wert zu ändern, bezeichnet von dem Benutzer.

5. Zustandsänderungs-Erfassungsvorrichtung gemäß Anspruch 1 oder 2, **dadurch gekennzeichnet, dass** der zu bewertende Frequenzbereich ein Frequenzbereich ist, der gleich oder größer als eine geschwindigkeitsproportionale Verstärkung ist, die in dem zu bewertenden Servosystem (23) verwendet wird.

6. Zustandsänderungs-Erfassungsvorrichtung (10) gemäß einem der Ansprüche 1 bis 5, **dadurch gekennzeichnet, dass** die Zustandsänderungs-Erfassungsvorrichtung (10) ferner umfasst:
ein Warninformationsausgabeteil, das konfiguriert ist, wenn durch das Bestimmungsteil (12) bestimmt wird, dass sich der Zustand des zu bewertenden Servosystem (23) geändert hat, Warninformationen auszugeben, die anzeigen, dass sich der Zustand des zu bewertenden Servosystems (23) geändert hat.

7. Zustandsänderungs-Erfassungsvorrichtung (10) gemäß einem der Ansprüche 1 bis 6, **dadurch gekennzeichnet, dass**
das Bestimmungsteil (12) konfiguriert ist, um eine erste Bestimmung durchzuführen, ob sich der Zustand des zu bewertenden Servosystems (23) geändert hat oder nicht, durch Vergleichen des Merkmalswerts, berechnet durch das Berechnungsteil (12), mit dem Merkmalswert in der Vergangenheit des zu bewertenden Servosystems (23), und um zu bestimmen, dass sich der Zustand des zu bewertenden Servosystems (23) geändert hat, wenn durch die erste Bestimmung eine vorbestimmte Anzahl von Malen bestimmt wird, dass der Zustand des zu bewertenden Servosystems (23) sich geändert hat.

8. Zustandsänderungs-Erfassungsvorrichtung (10) gemäß einem der Ansprüche 1 bis 6, **dadurch gekennzeichnet, dass** das Bestimmungsteil (12) konfiguriert ist, eine erste Bestimmung durchzuführen, um zu bestimmen, ob sich der Zustand des zu bewertenden Servosystems (23) geändert hat oder nicht, durch Vergleichen des Merkmalswerts, berechnet durch das Berechnungsteil (12), mit dem Merkmalswert in der Vergangenheit des zu bewertenden Servosystems (23) und eine zweite Bestimmung zum Bestimmen, ob sich der Zustand des zu bewertenden Servosystems (23) geändert hat oder nicht, basierend auf einer Größe einer Resonanzspitzenverstärkung in den Verstärkungs-Frequenz-Eigenschaften, gemessen durch das Berechnungsteil (12) und um ein logisches Produkt oder eine logische Summe von Bestimmungsergebnissen der ersten Bestimmung und der zweiten Bestimmung als ein Bestimmungsergebnis einzustellen, ob sich der Zustand des zu bewertenden Servosystems (23) geändert hat oder nicht.

9. Zustandsänderungs-Erfassungsvorrichtung (10) gemäß einem der Ansprüche 1 bis 8, **dadurch gekennzeichnet, dass**
das Berechnungsteil (12) konfiguriert ist, um den Merkmalswert des zu bewertenden Servosystems (23) zu berechnen, wenn eine oder mehrere Zustandsgrößen bezüglich des zu bewertenden Servosystems (23) eine Bedingung erfüllen, bezeichnet durch Startbedingungsinformationen.

10. Zustandsänderungs-Erfassungsvorrichtung (10) gemäß einem der Ansprüche 1 bis 8, **dadurch gekennzeichnet, dass** die Zustandsänderungs-Erfassungsvorrichtung (10) ferner umfasst:
ein Steuerteil (11), das konfiguriert ist, eine Vielzahl von Servosystemen (23) zu steuern, wobei, wenn eine oder mehrere Zustandsgrößen, die sich auf die Vielzahl von Servosystemen (23) beziehen und von dem Steuerteil erhalten werden, eine Bedingung erfüllen, bezeichnet von Startbedingungsinformationen, wobei das Berechnungsteil (12) konfiguriert ist, um eines von einer Vielzahl von Servosystemen (23), das durch die Startbedingungsinformationen bezeichnet ist, als das zu bewertende Servosystem (23) zu behandeln und um den Merkmalswert des zu bewertenden Servosystems (23) zu berechnen.

**11.** Zustandsänderungs-Erfassungsvorrichtung (10) gemäß Anspruch 9 oder 10, **dadurch gekennzeichnet, dass** das Berechnungsteil (12) konfiguriert ist, um die gemessenen Verstärkungs-Frequenz-Eigenschaften in einer Speichervorrichtung in Verbindung mit den Startbedingungsinformationen zu speichern.

**12.** Zustandsänderungs-Erfassungsvorrichtung (10) gemäß Anspruch 11, **dadurch gekennzeichnet, dass** das Berechnungsteil (12) konfiguriert ist, um die gemessenen Verstärkungs-Frequenz-Eigenschaften in der Speichervorrichtung in Verbindung mit einer Messzeit der Verstärkungs-Frequenz-Eigenschaften und der Startbedingungsinformation zu speichern.

**13.** Zustandsänderungs-Erfassungsverfahren, **dadurch gekennzeichnet, dass** das Verfahren umfasst:

einen Berechnungsschritt zum Messen von Verstärkungs-Frequenz-Eigenschaften eines zu bewertenden Servosystems (23) und zum Berechnen, als einen Merkmalswert des zu bewertenden Servosystems (23), einen Wert, der mit einem integrierten Wert von Verstärkungen bei einzelnen Frequenzen innerhalb eines zu bewertenden Frequenzbereichs in den gemessenen Verstärkungs-Frequenz-Eigenschaften korreliert ist; und einen Bestimmungsschritt zum Bestimmen, ob sich ein Zustand des zu bewertenden Servosystems (23) geändert hat oder nicht, durch Vergleichen des Merkmalswerts, berechnet durch den Berechnungsschritt, mit dem Merkmalswert in der Vergangenheit des zu bewertenden Servosystems (23).

**Revendications**

**1.** Dispositif de détection de changement d'état (10), **caractérisé en ce que** le dispositif de détection de changement d'état (10) comprend :

une partie de calcul (12) configurée pour mesurer les caractéristiques gain-fréquence d'un système d'asservissement à évaluer (23) et pour calculer comme valeur caractéristique du système d'asservissement à évaluer (23), une valeur corrélée avec une valeur intégrée de gains à des fréquences individuelles dans une plage de fréquences à évaluer dans les caractéristiques de gain-fréquence mesurées ; et une partie de détermination (12) configurée pour déterminer si oui ou non un état du système d'asservissement à évaluer (23) a changé en comparant la valeur de caractéristique calculée par la partie de calcul (12) avec la valeur de caractéristique dans le passé du système d'asservissement à évaluer (23).

**2.** Dispositif de détection de changement d'état (10) selon la revendication 1, **caractérisé en ce que**, la partie de calcul (12) est configurée pour calculer, en tant que valeur caractéristique du système d'asservissement à évaluer (23), une valeur intégrée de valeurs obtenues en soustrayant un gain de référence des gains à des fréquences individuelles à l'intérieur de la plage de fréquences à évaluer.

**3.** Dispositif de détection de changement d'état (10) selon la revendication 2, **caractérisé en ce que** le dispositif de détection de changement d'état (10) comprend en outre : une partie de changement de gain de référence configurée pour changer le gain de référence à une valeur désignée par un utilisateur.

**4.** Dispositif de détection de changement d'état (10) selon une quelconque des revendications 1 à 3, **caractérisé en ce que** le dispositif de détection de changement d'état (10) comprend en outre : une partie de changement de plage de fréquences configurée pour changer à l'une d'une valeur limite supérieure et d'une valeur limite inférieure de la plage de fréquences à évaluer à la valeur désignée par l'utilisateur.

**5.** Dispositif de détection de changement d'état selon la revendication 1 ou 2, **caractérisé en ce que**, la plage de fréquence à évaluer est une plage de fréquence égale ou supérieure à un gain proportionnel à la vitesse utilisée dans le système d'asservissement à évaluer (23) .

**6.** Dispositif de détection de changement d'état (10) selon une quelconque des revendications 1 à 5, **caractérisé en ce que** le dispositif de détection de changement d'état (10) comprend en outre : une partie d'émission d'informations d'avertissement configurée pour émettre, lorsqu'il est déterminé par la partie de détermination (12) que l'état du système d'asservissement à évaluer (23) a changé, des informations d'avertissement indiquant que l'état du système d'asservissement à évaluer (23) a changé.

7. Dispositif de détection de changement d'état (10) selon une quelconque des revendications 1 à 6, **caractérisé en ce que**, la partie de détermination (12) est configurée pour effectuer une première détermination sur le fait que l'état du système d'asservissement à évaluer (23) a changé ou non en comparant la valeur de caractéristique calculée par la partie de calcul (12) avec la valeur de caractéristique dans le passé du système d'asservissement à évaluer (23), et pour déterminer que l'état du système d'asservissement à évaluer (23) a changé lorsqu'il est déterminé un nombre prédéterminé de fois par la première détermination que l'état du système d'asservissement à évaluer (23) a changé.

8. Dispositif de détection de changement d'état (10) selon une quelconque des revendications 1 à 6, **caractérisé en ce que**, la partie de détermination (12) est configurée pour effectuer une première détermination pour déterminer si ou non l'état du système d'asservissement à évaluer a changé (23) en comparant la valeur de caractéristique calculée par la partie de calcul (12) avec la valeur de caractéristique dans le passé du système d'asservissement à évaluer (23) et une seconde détermination pour déterminer si oui ou non l'état du système d'asservissement à évaluer (23) a changé sur la base d'une amplitude d'un gain de crête de résonance dans les caractéristiques gain-fréquence mesurées par la partie de calcul (12), et pour définir un produit logique ou une somme logique des résultats de détermination de la première détermination et de la seconde détermination en tant que résultat de détermination indiquant si oui ou non l'état du système d'asservissement à évaluer (23) a changé.

9. Dispositif de détection de changement d'état (10) selon une quelconque des revendications 1 à 8, **caractérisé en ce que**, la partie de calcul (12) est configurée pour calculer la valeur caractéristique du système d'asservissement à évaluer (23) lorsqu'une ou plusieurs grandeurs d'état liées au système d'asservissement à évaluer (23) remplissent une condition désignée par les informations de condition de démarrage.

10. Dispositif de détection de changement d'état (10) selon une quelconque des revendications 1 à 8, **caractérisé en ce que** le dispositif de détection de changement d'état (10) comprend en outre : une partie de commande (11) configurée pour commander une pluralité de systèmes d'asservissement (23), dans lequel lorsqu'une ou plusieurs grandeurs d'état liées à la pluralité de systèmes d'asservissement (23) et obtenues par la partie de commande remplissent une condition désignée par les informations de condition de démarrage, la partie de calcul (12) est configurée pour traiter un de la pluralité de systèmes d'asservissement (23) qui est désigné par les informations de condition de démarrage comme le système d'asservissement à évaluer (23), et pour calculer la valeur caractéristique du système d'asservissement à évaluer (23).

11. Dispositif de détection de changement d'état (10) selon la revendication 9 ou 10, **caractérisé en ce que**, la partie de calcul (12) est configurée pour enregistrer les caractéristiques gain-fréquence mesurées dans un dispositif de stockage en association avec les informations relatives aux conditions de démarrage.

12. Dispositif de détection de changement d'état (10) selon la revendication 11, **caractérisé en ce que**, la partie de calcul (12) est configurée pour mémoriser les caractéristiques gain-fréquence mesurées dans le dispositif de mémorisation en association avec une mesure temporelle des caractéristiques gain-fréquence et des informations relatives à la condition de démarrage.

13. Procédé de détection de changement d'état, **caractérisé en ce que** le procédé comprend :

une étape de calcul pour mesurer les caractéristiques gain-fréquence d'un système d'asservissement à évaluer (23) et calculer, en tant que valeur caractéristique du système d'asservissement à évaluer (23), une valeur corrélée avec une valeur intégrée des gains à des fréquences individuelles dans une plage de fréquences à évaluer dans les caractéristiques gain-fréquence mesurées ; et
une étape de détermination pour déterminer si oui ou non un état du système d'asservissement à évaluer (23) a changé en comparant la valeur de caractéristique calculée par l'étape de calcul avec la valeur de caractéristique dans le passé du système d'asservissement à évaluer (23).

FIG. 1A

FIG. 1B

FIG. 2

FIG. 3

FIG. 4A

FIG. 4B

FIG. 5

Start

S201

Measure frequency response of servo system to be evaluated

S202

Calculate feature value of servo system to be evaluated from measured frequency response

S203

Calculate difference between calculated feature value and comparative feature value

S204

Does feature value difference fall within allowable range?

No

Yes

S205

Determination result: no state change has occurred

S206

Determination result: state change has occurred

End

FIG. 6

```
         ┌──────────────┐
         │    Start     │
         └──────┬───────┘
                │            ⟋ S301
                ▼
┌───────────────────────────────────────┐
│ Measure frequency response of servo    │
│ system to be evaluated                 │
└───────────────┬───────────────────────┘
                │            ⟋ S302
                ▼
┌───────────────────────────────────────┐
│ Calculate feature value of servo       │
│ system to be evaluated from measured   │
│ frequency response                     │
└───────────────┬───────────────────────┘
                │            ⟋ S303
                ▼
┌───────────────────────────────────────┐
│ Calculate difference between           │
│ calculated feature value and           │
│ comparative feature value              │
└───────────────┬───────────────────────┘
                │            ⟋ S304
                ▼
┌───────────────────────────────────────┐
│ Specify resonance peak gain based on   │
│ measured frequency response            │
└───────────────┬───────────────────────┘
                │            ⟋ S305
                ▼
         ╱────────────────╲
        ╱  Does feature     ╲      No
       ╱  value difference   ╲────────────┐
       ╲  fall within         ╱           │
        ╲ allowable range    ╱            │
         ╲ ...              ╱             │
          ╲──────┬────────╱              │
                 │ Yes                   │
                 ▼         ⟋ S306        │
┌───────────────────────────────────┐   │
│ Determination result: no state     │   │  ⟋ S307
│ change has occurred                │   ▼
└───────────────┬───────────────────┘ ┌──────────────────────────────────┐
                │                      │ Determination result: state      │
                │                      │ change has occurred              │
                │                      └──────────────┬───────────────────┘
                │◄────────────────────────────────────┘
                ▼
         ┌──────────────┐
         │     End      │
         └──────────────┘
```

Does feature value difference fall within allowable range and is resonance peak gain less than threshold value?

FIG. 7

```
                          ┌──────────────┐
                          │    Start     │
                          └──────────────┘
                                 │
                                 ▼              ╭─ S301
        ┌────────────────────────────────────────────┐
        │  Measure frequency response of servo system to be │
        │                  evaluated                  │
        └────────────────────────────────────────────┘
                                 │
                                 ▼              ╭─ S302
        ┌────────────────────────────────────────────┐
        │     Calculate feature value of servo system to be │
        │    evaluated from measured frequency response │
        └────────────────────────────────────────────┘
                                 │
                                 ▼              ╭─ S303
        ┌────────────────────────────────────────────┐
        │  Calculate difference between calculated feature value │
        │         and comparative feature value       │
        └────────────────────────────────────────────┘
                                 │
                                 ▼              ╭─ S304
        ┌────────────────────────────────────────────┐
        │   Specify resonance peak gain based on measured │
        │               frequency response            │
        └────────────────────────────────────────────┘
                                 │
                                 ▼          ╭─ S305b
                          ◇──────────────────────────◇
                         Does feature value              No
                    difference fall within allowable range ─────┐
                     or is resonance peak gain less than         │
                            threshold value?                     │
                          ◇──────────────────────────◇           │
                                 │ Yes                           │
                                 ▼          ╭─ S306               │
        ┌────────────────────────────────────────────┐           │
        │  Determination result: no state change has occurred │   │
        └────────────────────────────────────────────┘           │
                                 │                                ▼          ╭─ S307
                                 │      ┌──────────────────────────────────────────┐
                                 │      │ Determination result: state change has occurred │
                                 │      └──────────────────────────────────────────┘
                                 │◄───────────────────────────────┘
                                 ▼
                          ┌──────────────┐
                          │     End      │
                          └──────────────┘
```

# FIG. 8

```
┌─────────────────┐
│      Start      │
└─────────────────┘
         │
         ▼                                    S401
┌─────────────────────────────────────────┐
│ Measure frequency response of servo      │
│ system to be evaluated                   │
└─────────────────────────────────────────┘
         │
         ▼                                    S402
┌─────────────────────────────────────────┐
│ Calculate feature value of servo system  │
│ to be evaluated from measured frequency   │
│ response                                  │
└─────────────────────────────────────────┘
         │
         ▼                                    S403
┌─────────────────────────────────────────┐
│ Calculate difference between calculated   │
│ feature value and comparative feature     │
│ value                                     │
└─────────────────────────────────────────┘
         │
         ▼                  S404
      Does feature                      Yes
  value difference fall within allowable ──────┐
         range?                                │
         │ No                                   │
         ▼                     S405             │
┌─────────────────────────────────────────┐    │
│ Increment number of consecutive times     │    │
│ by "1"                                    │    │
└─────────────────────────────────────────┘    │
         │                                      ▼           S406
         │                   ┌────────────────────────────────────┐
         │                   │ Reset number of consecutive times   │
         │                   └────────────────────────────────────┘
         ▼        S407
      Number of                          No
  consecutive times ≥ defined ──────────────►
         number?
         │ Yes                   S408
         ▼
┌─────────────────────────────────────────┐
│ Determination result: state change has    │
│ occurred                                  │
└─────────────────────────────────────────┘
                                   ▼                S409
                      ┌────────────────────────────────────────────┐
                      │ Determination result: no state change has    │
                      │ occurred                                     │
                      └────────────────────────────────────────────┘
         │
         ▼
┌─────────────────┐
│       End       │
└─────────────────┘
```

# FIG. 9

**EP 3 779 627 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016034224 A

- US 2016033959 A